# EUROPEAN PATENT APPLICATION

(11) **EP 2 428 354 A1**
(43) Date of publication of application: **14.03.2012**
(21) Application number: 10009383.0
(22) Date of filing: 09.09.2010
(51) Int. Cl.: B30B 9/30, E05F 15/20

(54) **An automatic door for a baler**

(71) Applicant: Bramidan A/S, 6740 Bramming (DK)
(72) Inventor: Christensen, Ejnar Christian, 6800 Varde (DK); Knudsen, Brian Kristian, 6261 Bredebro (DK)
(74) Representative: Olsen, Lau Lund

(57) **Abstract**

The invention discloses an automatic door adapted for automatically sliding in opposite directions for respectively closing and opening access to a chamber, e.g. a chamber in a baler, said door is characterised in that it comprises an inner door, a cover, where said cover is at least partly covering said inner door and where said cover is displaced relative to said inner door at a distance in said sliding direction for closing access to said chamber, a flexible member connecting said inner door and said cover for obtaining said distance, and detecting means detecting when said distance between said inner door and said cover is decreased.

## Description

The invention relates to an automatic door primarily for use in a vertical baler.

### Background

The use of cardboard boxes, plastic bags, plastic wrapping and the like for packaging, storage and transporting of e.g. food products and staple goods are widely used in the industry. After use of the storage and packaging materials, they are normally disposed or recycled. For an easy handling of these waste products, vertical balers are commonly used to create compacted bales by pressing all extra air inside e.g. the cardboard out. A vertical baler normally comprises a chamber with a ram which compacts the waste product placed therein. The waste product is placed in the chamber through a door located at the upper part of the baler. After closing this door, the ram can be activated, whereby it compacts the waste product by pressing the product from the top and downwards. The compacted bale of waste material can subsequently be subtracted from a second door placed at the lower part of the baler. In some balers, the upper door will automatically open, when the lower door is opened as the two share a common frame.

The upper door for depositing the waste into the baler can be opened in different ways, e.g. manually by a handle whereby the door connected to the side of the baler swings open either sideways or upwards into the room. This type of solution is space consuming and can be inconvenient for the user, as the door is often at heads level and one therefore needs to bend down to avoid the door.

Alternatively, the upper door can open and close by sliding downwards on the outside of the lower door. Thus, it is a solution which takes up a lower amount of space. The process of sliding the upper door downwards for opening is often automatically activated by gravity.

Upon closing the door there is a risk that the user can get his/hers hand caught in between the frame of the baler and the door, if e.g. he/she tries to put in or remove extra waste as the door is closing. As there is an increasing focus on safety at working places, these commonly used upper doors can be problematic.

### Description of the invention

Disclosed herein is an automatic door adapted for automatically sliding in opposite directions for respectively closing and opening access to a chamber, e.g. a chamber in a baler, said door is characterised in that it comprises 1) an inner door, 2) a cover, where said cover is at least partly covering said inner door and where said cover is displaced relative to said inner door at a distance in said sliding direction for closing access to said chamber, 3) a flexible member connecting said inner door and said cover for obtaining said distance, and 4) detecting means detecting when said distance between said inner door and said cover is decreased. By a flexible member connecting said inner door and said cover is also included that the cover e.g. is resting on top of the flexible member.

The automatic door can slide in different directions, both horizontally, vertically and/or at an angle as long as the two sliding directions are in opposite directions. The detection means can send a signal which e.g. tricks an alarm, stops the movement of the door at the current position and/or moves the door to a pre-determined position. By the above, is thereby obtained an automatic door, which can easily be affected by changing the distance between the cover and the inner door. Hence, a user does not need to affect the inner door directly in order to make the door e.g. move in the different direction or stop. This is advantageous when the automatic door is used in a baler, e.g. a vertical baler, where the inner door is normally a heavy door, which is not sensitive to touch from a user as it is constructed to withhold an amount of pressure inside the chamber during operation of the baler. The flexible member used in the door can have a variety of different designs, e.g. it can be a spring or an elastic material, as long as it allows for the distance between the cover and the inner door to be changed.

In one or more embodiments said detecting means is adapted for changing the sliding direction when said distance between said inner door and said cover is decreased. Thus, if the distance between the inner door and the cover is changed as the automatic door is closing, the detector means can change the sliding direction thereby opening the door again. This is advantageous from a safety point of view, as it can thereby be avoided that a user gets e.g. his/hers fingers squished in between the door and e.g. the frame surrounding the door or an opposite door.

In one or more embodiments said flexible member is a spring element, which ensures that the initial distance between the inner door and the cover is restored when the door is not affected by the user anymore.

In one or more embodiments said inner door is connected to said cover using a flexible member allowing said inner door to be angled relative to said cover during sliding in said opposite directions. Thereby, when the door is closed it can be positioned parallel to a neighbouring plate element together with which the door generates a plane surface on at least one side. Further, because of the angling during opening and closing, the inner door can slide behind e.g. an extra cover plate positioned parallel to the neighbouring plate and hence only generate the plane surface with the neighbouring plate when the inner door has passed the latter.

In one or more embodiments at least part of said cover is resting on top of at least part of said flexible member. Hence, in a baler, the user can hold the cover by hand at a given position while the inner door moves downwards. This ensures that the user cannot get his/hers fingers stuck between the cover for the inner door and a cover for the lower door as the automatic door slides up and down. This is highly advantageous from a safety point of view.

In one or more embodiments said cover is L-shaped covering the top and the front of said inner door. This ensures that mechanical machinery positioned e.g. on the inner door can be hidden behind the cover, thereby reducing the risk of anyone getting body parts caught in the machinery at the same time as improving the aesthetical appearance of the door. Further, when the cover is L-shaped it is possible to change the distance between the cover and the inner door by pushing the cover partly from the side and thus not only at the top of the cover. When the door is used in a baler, this means that e.g. the closing of the automatic door can be stopped by pushing the cover from the side.

In one or more embodiments said cover is made from a plate. By using a plate, the weight of the cover can be kept low, which reduces the demands to the flexible member, e.g. a spring. By using a plate, it is further easier to control the amount of influence required to change the distance between the cover and the inner door. It can e.g. be enough for the user to touch the light cover in order to make the heavier inner door e.g. slide in the opposite sliding direction. Further, with a plate as cover, the cover can easily be held by hand power by the user.

In one or more embodiments said cover is a light weight material, such as e.g. aluminium or plastic, yielding a light weight cover.

In one or more embodiments said inner door is made from steel, yielding a heavy door which e.g. can withstand the pressure from waste material and a ram inside a baler during operation.

In one or more embodiments said automatic door further comprises a lower door where in front the inner door can slide. The lower door and the automatic door can be one integrated unit, which can open together or alternatively, the two doors can both open individually of one another.

Herein is further disclosed a baler for making bales of a waste material such as e.g. cardboard or plastic by compacting said waste material in a chamber, said baler comprising an automatic door according to the above.

### Brief description of the drawings

Figures 1 a-b illustrate the principles of a baler.
Figures 2a-c illustrate simplified embodiments of the automatic door according to the invention.
Figures 3a-c illustrate an embodiment of the automatic door in different positions.
Figures 4a-c illustrate a more detailed view of the embodiment shown in figures 3a-c, whereas figure 4d shows a close up of the detector.
Figures 5a and 5b illustrate a detailed view of an embodiment of the detector in the deactivated and the activated position, respectively.
Figure 6a-d illustrates a baler with an automated door according to the invention displayed in different positions from completely closed to fully opened.

### Description of preferred embodiments

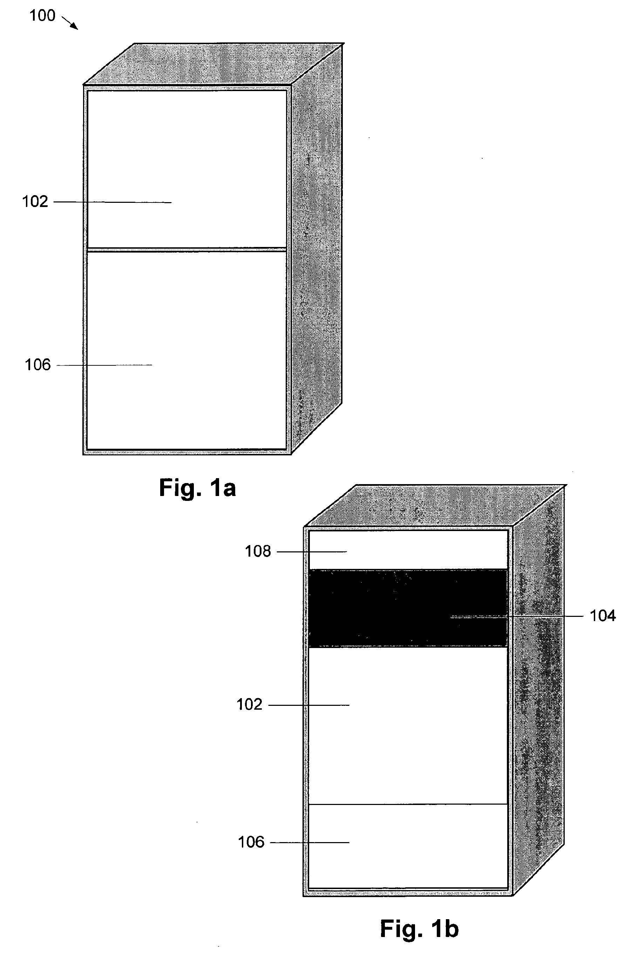

Figures 1 a-b schematically illustrate a baler 100 comprising an upper automatic door 102 for disposing the waste into a chamber 104 inside the baler 100. In figure 1a, the upper automatic door 102 is closed, whereas it is partly opened in figure 1b. The baler 100 further comprises a lower door 106 and a ram 108 inside the chamber 104 for compacting the waste. The ram 108 is situated at the top of the chamber 104 and spans the area inside the chamber horizontally, nearly covering the entire area. The lower 106 and the upper door 102 are integrated into one unit by a common frame, and said unit can be opened for subtracting the waste from the baler 100. In an alternative embodiment of the invention, the lower door 106 can be opened outwards separately.

The operating principles behind the baler 100 is in short as follows; a user disposes waste, e.g. cardboard, carton, paper, plastic and the like, through the upper door 102. Normally this door is opened, as it can be inconvenient for the user having to press a button opening the baler before being able to dispose his/hers hand full of waste into the baler. By pressing a button (not shown), the upper door 102 closes, where after the ram 108 inside the chamber 104 moves from its resting position at the top of the chamber 104 downwards towards the bottom of the chamber 104 compacting the waste material. After the waste has been compacted, the ram 108 returns to its top resting position and the upper door 102 returns to its open position. The user can subsequently add more waste and repeat the compaction process. The baler might also have additional buttons having e.g. a function of individually closing the inner door, for activating the ram, or for opening the inner door. When the bale of compacted material fills the space behind the lower door 106, the two doors (the upper door 102 and the lower door 106) are opened and the compacted waste removed.

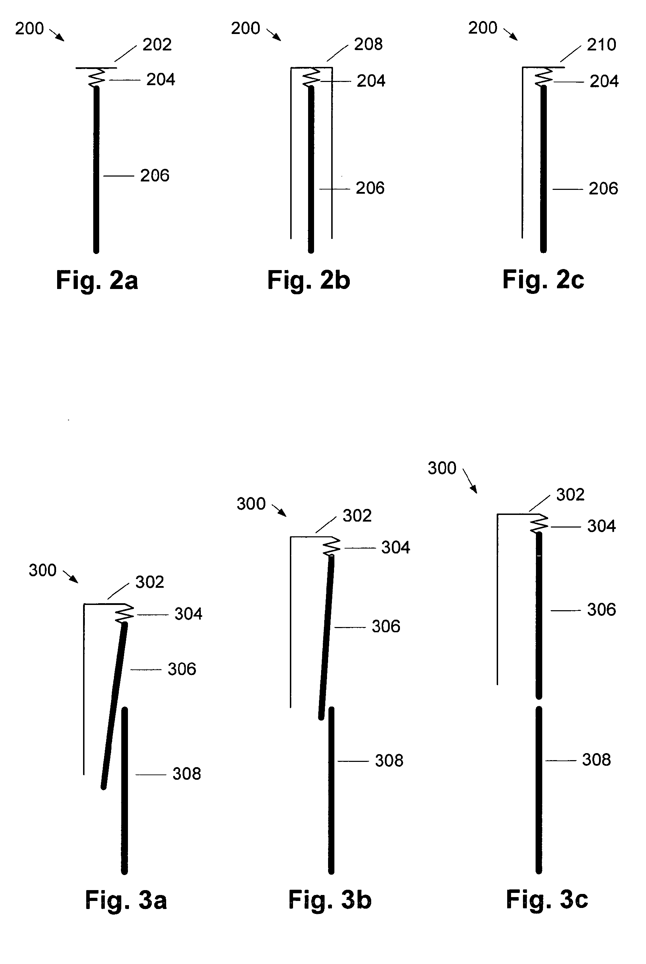

Figures 2a-c illustrate simplified embodiments of the upper automatic door 102 of figures 1 a-b comprising a cover 202 and a flexible member 204 connecting the cover 202 to an inner door 206. In the automatic door 200 in figure 2a, the cover 202 is only spanning the top of the inner door 206, whereas the cover 208 is covering three of the sides of the inner door 206 in figure 2b. The L-shaped cover 210 in figure 2c is covering two of the sides of the inner door 206. In the figures, the flexible member 204 is shown as a spring, but other options such as e.g. an elastic material could also be used.

Figures 3a-c illustrate an embodiment of the automatic upper door 300 in a baler. The door 300 is shown in a semi-opened, a nearly closed, and a completely closed position in figures 3a, 3b, and 3c, respectively. The cover 302 is L-shaped and the flexible member 304 is a spring. When the inner door 306 opens, it slides over and along downside a lower door 308 of the baler.

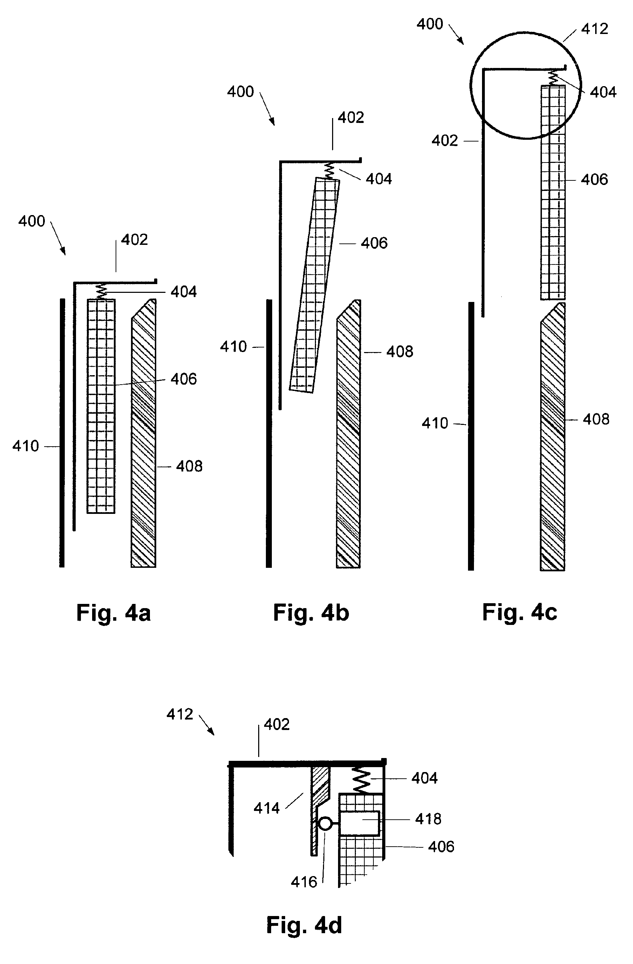

Figures 4a-c illustrate a more detailed view the automatic door 400 shown in figures 3a-c, wherein the cover 402 is L-shaped and the flexible member 404 connecting the cover 402 and the inner door 406 is a spring. In figure 4a the door 400 is shown in a fully opened position, in figure 4b the door 400 is in a partly opened position, and in figure 4c the door 400 is completely closed. When the door 400 is fully opened, the inner door 406 is positioned alongside and parallel with the lower door 408 in the baler. The baler further comprises a second cover 410 for protecting both the lower door 408 and the upper door 400. The second cover 410 is placed such that it covers both the upper door 400 as it slides down in between the second cover 410 and the inner door 408, when the door 400 opens. The lower door 408 and the upper door 400 can be two separates doors, but also be integrated into one door by a common frame framing both the upper door 400 and the lower door 408.

When compacting waste material using the baler, it is essential that the inner door 406 and the lower door 408 are completely aligned vertically along the inner surface of the chamber inside the baler thereby forming a flat surface in a closed position as shown in figure 4c. Otherwise, the waste can get stuck between the inner door 406 and lower door 408 and the compaction process will most likely stop. Further, as there are strong forces pressing against the surfaces of the chamber when the ram compacts the waste material, it is essential both the inner door 406 and the lower door 408 are constructed from a strong material, e.g. steel, which can withhold the pressure. Contrary, as the two covers 402, 410 are not withholding the pressure from the waste material and the ram during the compaction process, they can with advantage be thin compared to the doors 406, 408 and be e.g. a plate of a light material such as e.g. aluminium or plastic.

The inner door 406 can move relative to the cover 402 in the horizontal plane. This is seen clearly in figure 4a showing the door 400 in the fully opened position where the inner door 406 and the flexible member 404 is displayed horizontally compared to the door 400 in the fully closed position shown in figure 4c. This ensures that the inner door 406 can be aligned and slide down along and parallel with the lower door 408 when opening and still be aligned vertically with the lower door 408 when closed, thereby forming a flat surface inside the chamber in the baler.

In figure 4c, the circle 412 marks the close up of the detection and activation mechanism shown in figure 4d. The door is activated when the cover 402 is pushed downwards such that the distance between the cover 402 and the inner door 406 decreases. The actuator means 414 thereby comes in contact with a detection button 416 and an initiation means 418 is activated. The activation means 418 can cause the door to stop, slide downwards and/or send a warning signal.

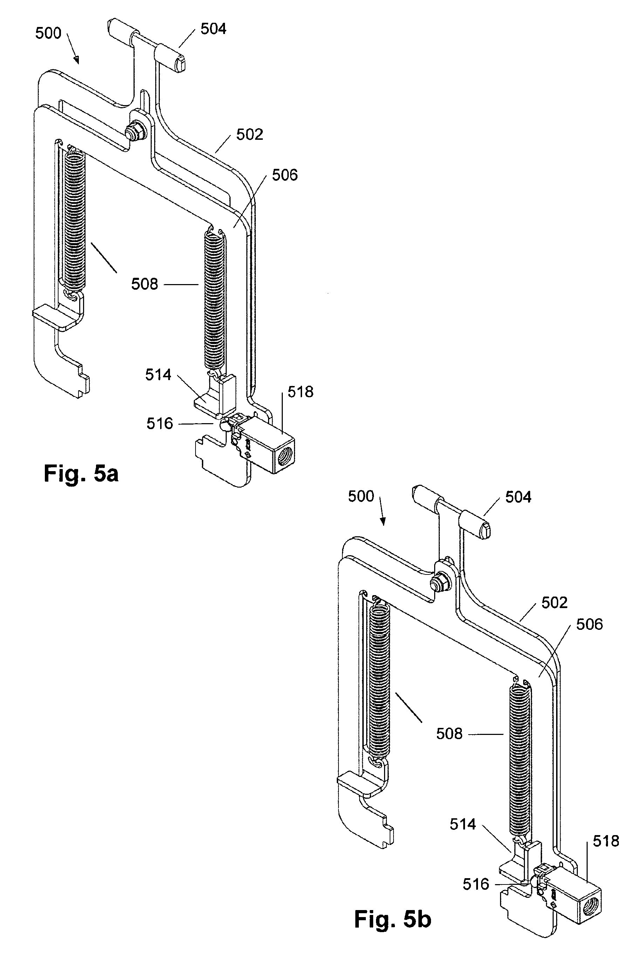

Figures 5a and 5b illustrate a detailed view of an embodiment of the detector means 500 in the automated door in the deactivated and the activated position, respectively. The detector means 500 comprises a cover support rod 502 shaped as a T at the top 504. The ends of the T are normally covered with rubber and upon the top 504, the cover 402 (not shown) rests.

The cover support rod 502 is connected to the inner door support rod 506 by a set of springs 508. The bottom of the springs 508 are connected to the cover support rod 502, whereas the top of the springs 508 are connected to the inner door support rod 506.

If the cover is blocked, e.g. by the user pressing his/hers hand on the cover, the cover support rod 502 is pushed downwards whereby the springs 508 are stretched. This allows for the actuator means 514 on the cover support rod 502 to get in contact with the detection button 516 on the inner door support rod 506 which in turn activates an initiation means 518, e.g. a switch. The initiation means 518 thereafter sends a signal e.g. to a motor, which ensures that the inner door returns to the completely open position. Alternatively, instead of returning the door to the open position, the initiation means 518 could send a signal which tricks an alarm, stops the movement of the door at the given position or moves the door to a different pre-determined position, for example a half open position.

If the cover is constructed from a light material, e.g. aluminium or plastic, and at the same time is resting on the top of the cover support rod 502, one can hold the cover by hand at a given position while the inner door moves downwards. This ensures, that the user cannot get his/hers fingers stuck between the cover for the inner door and the cover for the lower door, as the automatic door slides up and down. This is highly advantageous from a safety point of view.

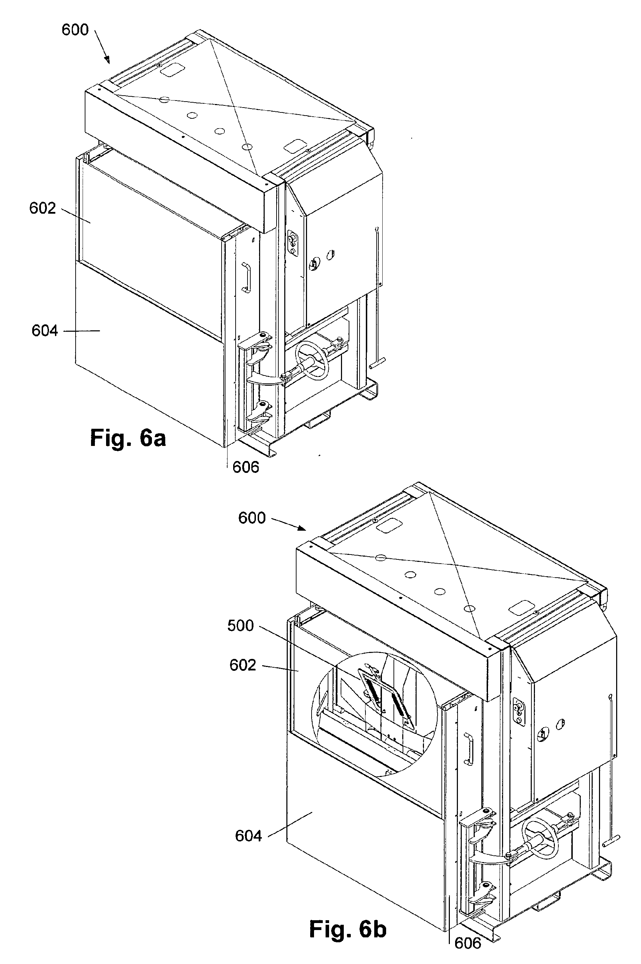

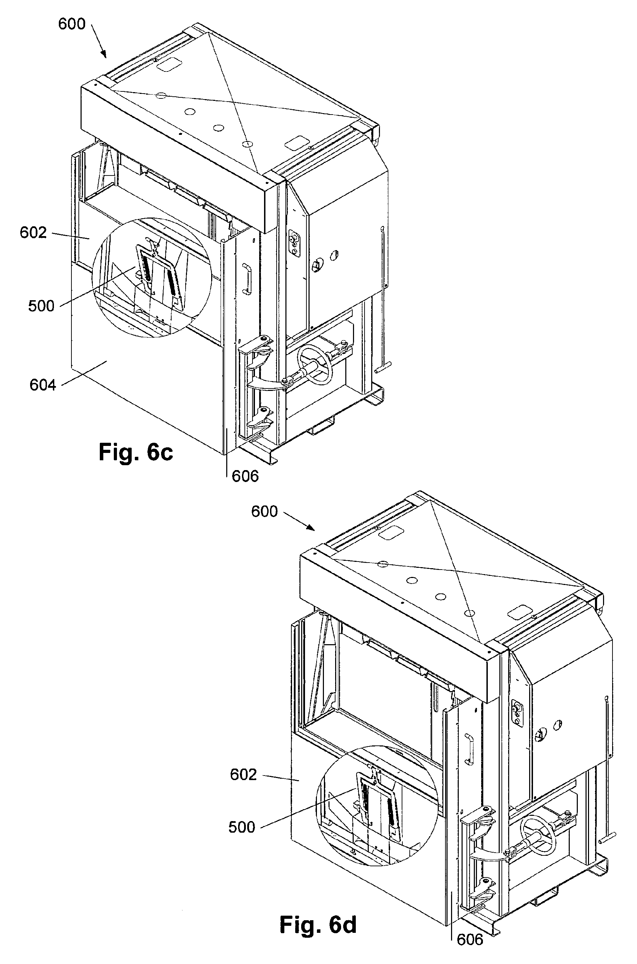

Figures 6a-d illustrate a baler 600 comprising an automatic door 602 and a lower door with a front cover 604. In figures 6a and 6b, the door 602 is displayed in the completely closed position, whereas figure 6c shows the door 602 in a partly opened position and figure 6d shows the door in a completely opened position. The lower door and the upper door 602 are integrated into one unit by a common frame 606, and said unit can be opened for subtracting the waste from the baler 600. In an alternative embodiment of the invention, the lower door can be opened outwards separately.

The automatic door 602 is operated by pushing a button, whereby 1) the upper automatic door 602 slides from its fully opened resting position to a closed position, 2) the ram compacts the waste material, and 3) the upper door 602 returns to its resting position, allowing the user to add more waste into the baler. Hence, it does not require the user to use hand power to move the heavy door normally made of steel.

The circle in figures 6b-d is a view inside the cover into the deactivated detector means 500 as described in figures 5a-b. The bottom of the detector means 500 and the inner door move in the horizontal plane relative to the inner door cover as the door moves from the opened to the closed position and back. This ensures that 1) the inner door is aligned vertically with the lower door in the closed state forming a flat surface inside the chamber as shown in figure 4c, and 2) the inner door can slide down to a position between the lower door cover plate 604 and the lower door, thereby hanging parallel with both of them as shown in figure 4a.

### References

- 100: Baler
- 102: Upper automatic door
- 104: Chamber inside the baler
- 106: Lower door
- 108: Ram

- 200: A first embodiment of the invention
- 202: First embodiment of the cover
- 204: Spring
- 206: Inner door
- 208: Second embodiment of the cover
- 210: Third embodiment of the cover

- 300: The inner door in a first position
- 302: Cover
- 304: Spring
- 306: Inner door
- 308: Loverdoor

- 400: The inner door in a first position
- 402: Cover
- 404: Spring
- 406: Inner door
- 408: Lover door
- 410: Second cover
- 412: Close up of the detecting means in the door
- 414: Actuator means
- 416: Detection button
- 418: Initiating means

- 500: Detector means, deactivated position
- 502: Cover support rod
- 504: T-shaped end of the detector
- 506: Inner door support rod
- 508: Springs
- 514: Actuator means
- 516: Detection button
- 518: Initiation means

- 600: Baler
- 602: Upper automated door
- 604: Lower door with front cover
- 606: Frame framing the upper and the lower door

## Claims

1. An automatic door adapted for automatically sliding in opposite directions for respectively closing and opening access to a chamber, e.g. a chamber in a baler, said door is **characterised in that it** comprises:
- an inner door;
- a cover, where said cover is at least partly covering said inner door and where said cover is displaced relative to said inner door at a distance in said sliding direction for closing access to said chamber;
- a flexible member connecting said inner door and said cover for obtaining said distance, and;
- detecting means detecting when said distance between said inner door and said cover is decreased.

2. An automatic door according to claim 1, wherein said detecting means is adapted for changing the sliding direction when said distance between said inner door and said cover is decreased.

3. An automatic door according to claim 1 or 2, wherein said flexible member is a spring element.

4. An automatic door according to any of the claims 1-3, wherein said inner door is connected to said cover using a flexible member allowing said inner door to be angled relative to said cover during sliding in said opposite directions.

5. An automatic door according to any of the claims 1-4, wherein at least part of said cover is resting on top of at least part of said flexible member.

6. An automatic door according to any of the claims 1-5, wherein said cover is L-shaped covering the top and the front of said inner door.

7. An automatic door according to any of the claims 1-6, wherein said cover is made from a plate.

8. An automatic door according to any of the claims 1-7, wherein said cover is a light weight material, such as e.g. aluminium or plastic.

9. An automatic door according to any of the claims 1-8, wherein said inner door is made from steel.

10. An automatic door according to any of the claims 1-9, wherein said automatic door further comprises a lower door where in front the inner door can slide.

11. A baler for making bales of a waste material such as e.g. cardboard or plastic by compacting said waste material in a chamber, said baler comprising an automatic door according to any of the claims 1-10.
